Europäisches Patentamt

European Patent Office

Office européen des brevets

(11) Publication number: **0 274 853**
**A1**

(12) **EUROPEAN PATENT APPLICATION**

(21) Application number: **87310640.5**

(22) Date of filing: **03.12.87**

(51) Int. Cl.⁴: **A01B 59/048**

(30) Priority: **22.12.86 DE 3644019**
**12.06.87 DE 3719725**

(43) Date of publication of application:
**20.07.88 Bulletin 88/29**

(84) Designated Contracting States:
**AT DE ES FR GB IT NL SE**

(71) Applicant: **J.I. Case GmbH**
**Industriestrasse 39**
**D-4040 Neuss/Rhein(DE)**

(72) Inventor: **Schillings, Dieter**
**Martin-Rieffert-Strasse 60**
**D-4156 Willich 1(DE)**
Inventor: **Peters, Bernard**
**Vinzenallee 18**
**D-5000 Köln 40(DE)**
Inventor: **Oellers, Hans Gerd**
**Engelsholt 146**
**D-4050 Mönchengladbach 1(DE)**

(74) Representative: **Norcliffe, Kenneth Adrian**
**J.I. Case Europe Limited**
**Meltham Huddersfield HD7 3AR(GB)**

(54) **Apparatus for the frontal connection of equipment to agriculturally usable motor vehicles, in particular farming tractors.**

(57) To bring not only a front-mounted hydraulic three-part linkage, but also other desireable components such as a power take-off casing (11) and bearing element (12) adapted to carry ballast weight (13) and incorporatng a draft jaw (14), as near as possible to the front whell axle (2) and substantially behind the front surface of the front panelling (4) of a farm tractor, the support for all frontally disposed components is a frame (10) flange-mounted on, or integral with, the front axle bearer. The links (5) are disposed outside the panelling (4), can be swung behind the front surface of the panelling (4) into an inoperative position, are carried by a tubular rock shaft (3) which is connected to hydraulic cylinder (21), and have respective rear extensions (19). Each link (5) can in certain angular position, be removeably fitted by means of a journal into a the tubular rock shaft (3) and, in all other angular positions, can be fixed axially by confining its rear extension (19) in a pocket (25) on the rock shaft (3) with or without limited angular float by means of a retaining bolt (30) engageable in alternative holes (23, 24). To preset the lowered position of the lower links (5), a pivotable holder (37) with laterally extending arms (38, 39) can be mounted in the jaw (14) by a bolt (36), and chains (40, 41) connected to the links (5) can be suspended by any one of their links at the end of the arms (38, 39).

*Fig. 2.*

## Apparatus for the frontal connection of equipment to agriculturally usable motor vehicles, in particular farming tractors.

This invention relates to an apparatus for the frontal connection of equipment to agriculturally usable motor vehicle, in particular farming tractors, having lower links disposed outside the front panelling of such a tractor, mounted pivotably behind the front surface of said panelling, and provided with rear extensions in the manner of bellcrank levers; connecting lugs for an upper link; and hydraulic cylinders which act on the rear extensions of the lower links and are connected at their upper ends to a frame fixed to the front axle bearer.

Such an apparatus is disclosed by German Offenlegungsschrift 3,216,589. The lower links are in this case mounted on laterally-spaced longitudinally-extending bearer members, which are bolted at their rear ends to the fastening points for a front loader and are supported at their front ends by means of brackets on the front axle bearer, where they are interconnected by a cross member which also carries the connecting lugs for the upper link.

Although the hydraulic cylinders act on rear extensions of the lower links to effect raising of said links, due to their approximately horizontal orientation they do not make it possible for the lower links to swing back behind the front surface of the front panelling of the tractor. The forward protrusion of the lower links beyond the front surface of said panelling results in structural parts projecting dangerously for other traffic when front equipment is removed and said parts have to be made conspicuous in accordance with the German statuory motor vehicle regulations.

In order to locate the points of attachment of the lower links of a front-mounted hydraulic three-point linkage far enough back on a tractor that they are in the region of the front wheels, it is known from EP-A1 0 133,637 to arrange, within the front panelling of the tractor, two lower links which are pivotably mounted behind the front edge of said panelling with respect to its direction of travel, an upper link, and at least one hydraulic cylinder connected to the vehicle frame . It is not proposed in EP-A1 0 133,637, however, to incorporate additional features appropriate for current requirements at the front of a farm tractor, such as a power take-off shaft, ballast weights, and a draft jaw.

It is also a disadvantage of this known arrangement that, due to the substantially vertical orientation of the hydraulic cylinders, the lower links cannot be retracter behind the front panelling when no implement is connecte to them, but have to be removed if they are not required.

It is known from German Offenlegungsschrift 2,758,978 to fasten a unitary casting on the front side of the front axle bearer, which casting is designed as the bearing element for front-munted implement hitch means, including the hydraulic lifting cylinder necessary for same, and has a central recess for the protected passage of a front-mounted power take-off shaft. Underneath the power take-off shaft, a draft jaw is disposed integrally with the bearing element.

It is disadvantageous in the case of this known arrangement that the implement hitch means comprising upper and lower links projects so far forward as to impair the connection of an implement to the power take-off shaft, and that the implement hitch means has to be removed if an implement is to be connected to the draft jaw. Furthermore, when no implement is connected to them, the lower links cannot be swung behind the front surface of the front panelling, owing to their mode of mounting and to the disposition of the hydraulic cylinder in front of said front surface.

German Offenlegungsschrift 3,209,849 discloses a front-mounted power lift mechanism for tractors comprising lower links which are pivoted on laterally-spaced bearing plates, can be swung by vertically orientated hydraulic cylinders, and are interconnected by a cross member in front of the front panelling of the tractor. The vertical orientation of the cylinders and the existence of the cross member prevent the retraction of the lower links behind the front surface of said panelling. Although the laterally-spaced bearing plates are interconnected in their upper front regions by a cross-member, which also carries the connecting lugs for the upper link, it cannot carry any ballast weights.

It is pointed out to German Offenlegungschrift 3,306,415 that, according to the provisions of the German motor vehicle construction and use regulations, parts protruding beyond a vehicle must be covered and a solution to this problem is to swing up or to disassemble the links of a power-life mechanism, but that this is not always readily possible or is very laborious, depending on the configuration and arrangement of the front-mounted implement hitch means. The solution proposed by this known arrangement consists in a bumper which is secured to the front ends of the lower links, is rounded off at the front in the direction of collision and at the sides, and covers the front ends of the lower links in all their positions.

It is disadvantageous in the case of this known arrangement that the bumper has to be removed in order to couple implements to the power lift mechanism.

Finally, a front-mounted implement hitch means is known from German Offenlegungsshrift 2,718,959, in which there is fixed between the lower links a tubular member into which journals for locating the rear ends of the lower links can be inserted at either side. The journals are not, however, connected to the lower links but pass through said links and also through plates fixed to the latter.

The object of the present invention is to provide an apparatus for the frontal connection of equipment to agriculturally usable motor vehicles having the features mentioned in the opening paragraph hereof in such a way that is does not include parts which endanger other traffic and obscure the driver's view when front equipment is removed and that the frame fixed to the front axle bearer can carry further components or assemblies required for the frontal connection of equipment.

The object is achieved by the combination of features according to Claim 1, some of which are known per se.

The mounting, known per se, of the lower links, which are disposed outsides the front panelling, makes it possible in the first place for the lower links to be swung into an upwardly and rearwardly directed inoperative position by completely extending the hydraulic cylinders, in which position they do not project beyond the front surface of said panelling.

In an advantageous development of the invention, the frame fixed to the front axle bearer has a central recess for receiving a power take-off casing and on its front side has means for securing a bearing element adapted to carry ballast weights and incorporating a draft jaw. This allows these components to be integrated in the frame fixed to the front axle bearer, and also provides an improved overall view from the tractor cab and better styling of the tractor front end.

In a further development of the invention, the lower links can be removeably fitted by means of journals into each end of a tubular rock shaft when said links are in a certain angular position. The rock shaft is mounted on the underside of the frame, only a little ground clearance being thereby lost but, with a long rock shaft, space being gained in order not to impair the steering lock of the front wheels and the pivotabiltity of the front axle.

In all angular positions other than that in which the lower links are removeably fitted into the rock shaft, the lower links are fixed axially by the confinement of their rear extensions in pockets secured to the rock shaft and having outer retaining flanges. Forward angular movement of each rear extension relative to the associated pocket is limited by the radially inwardly directed front end of a laterally protruding member on the periphery of the pocket, and relative rearward rotation is limited by a retaining bolt which can be inserted in one position to rigidly fix the lower link to the rock shaft or in another position to connect the lowe link to the rock shaft with limited angular float.

The retaining of the rear extensions of the lower links in the pockets secured to the rock shaft prevents the lower links from sliding out of the tubular rock shaft when in their working positions, and also selectively prevents or limits angular movement of the lower links relative to the rock shaft.

The same retaining bolt can be used to secure each lower link in its inoperative position whe the hydraulic cylinders are completely extended, by removing said bolt from the pocket and inserting it in a hole in a fixed part of the tractor.

To enable a plurality of implements to be used simultaneously for tillage or for harvesting, front-mounted implement hicht means have hitherto generally been retrofitted to tractors as additional equipment. However, the working positions of certain front-mounted implements have to be accurately maintained and therefore need to be reset after temporarily raising such an implement, for example after turning the tractor at the end of a field.

Raising and lowering of front-mounted implements has generally been effected by means of hydraulic cylinders which are connected to the tractor and act on the lower links. Lowering into the required position must in such cases be newly performed each time. With visual checking by the driver, hindered by the front panelling of the tractor, deviations from the required position of the lower links result.

Having regard to the preceding two paragraphs, a further object of the invention is, with an apparatus having the features mentioned in the opening paragraph hereof, the relocate the lower links automatically in a required position after they have been raised, provision being made also for adjusting the required positions of the lower links for different implements or working conditions.

This further object is achieved by the combination of features according to claim 6.

The use of chains for mechanically limiting the position of lower links is known per se, in particular for the lateral stabilization of the lower links of a hydraulic three-point linkage. The connection of the chains to the lower links to effected by means of bolts and brackets secured to the lower links, and the connection and disconnection of the chains therefore requires auxiliary tools.

As a bolt in the front draft jaw exists, a holder can be pivotally mounted on it with arms which extend laterally with respect to the direction of travel, and any one link of each chain can be suspended at the ends of said arms without auxiliary tools. The extended lengths of the chains provided positive location of the lower links in the required working position. By utilising the chain pitch the lowered positions of the respective lower links can be adjusted differently, without the use of any turnbuckles, associated with lift rods, which tend to rust and bend.

Another advantage is that the pivotable holder allows the lift linkage to swing so as to provide optimum load distribution, which is not the case with known arrangements due to production tolerances.

Thus the holder on which any link of each chain is suspended without additional fastening elements and auxiliary tools, is pivotably mounted on the bolt in the draft jaw incorporated in the bearing element adaptd to carry ballast weights, and connecting lugs for the upper link.

The bolt in the draft jaw consequently assumes an additional function. The holder and chains can be assembled and diassembled without tools.

A preferred embodiment of the invention will now be described, by way of example only, with reference to the accompanying drawings of which:-

Fig. 1 shows a diagrammatic side view of the frontal connection apparatus with lowered lower links, upper link in inoperative position, and suspended ballast weights;

Fig. 2 shows the same view with lowered lower links and, in broken lines, with the lower links swung up into their inopertive position;

Fig. 3 shows a side view, partly in section, in a vertical plane passing through one of the hydraulic cylinders;

Fig. 4 shows a plan view of one of the lower links;

Fig. 5 shows a side view of a lower link with rear extension;

Fig. 6 shows a side view of the rock shaft with a pocket for receiving the rear extension;

Fig. 7 shows a fornt view of the rock shaft with the connecting lugs for the hydraulic cylinders and with the pockets;

Fig. 8 shows a side view of the frontal connection apparatus with the lower links suspended by chains, the draft jaw, and the connecting lugs for the upper link; and

Fig. 9 shows a plan view of the frontal connection apparatus, partly in section, with the holder for the chains pivotably mounted in the draft jaw.

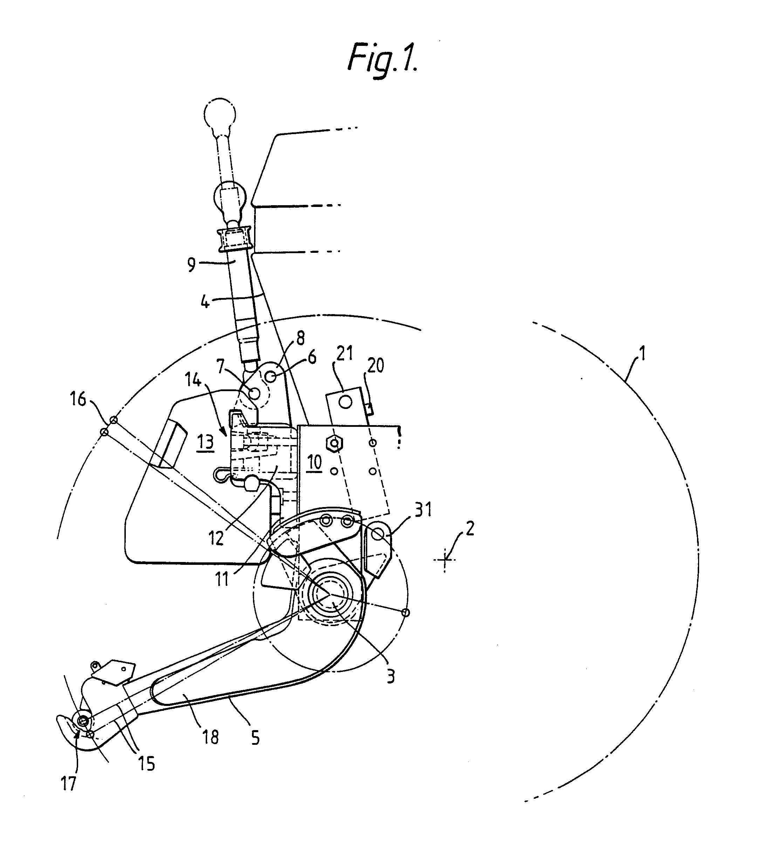

As Fig. 1 shows, a rock shaft 3 for two lower links 5, which are disposed outside the front panelling 4, provided at the front end of a farm tractor, one front wheel of which is indicated at 1, in the vicinity of the front wheel axle 2. At a distance from the rock shaft 3, in one of two holes 6, 7 in a pair of upwardly extending lugs 8, thereis pivotally mounted an upper link 9 which, when not in use, is clipped to the front panelling 4 in an approximately vertical inoperative position.

The support for all frontally connectable components, hereinafter described in more detail, is a cast frame 10, flange-mounted on the front axle bearer or integrated with the latter. The frame 10 includes a cental recess for receiving a power take-off casing 11. On its underside there are provided bearing means for the rock shaft 3, and on its front side there are provided means for securing a bearing element 12 adapted to carry ballast weights 13. In the centre between two separate groups of ballast weights 13 there is provided a draft jaw 14 as a manoeuvring aid, in which an attachement can be coupled by means of a bolt 36.

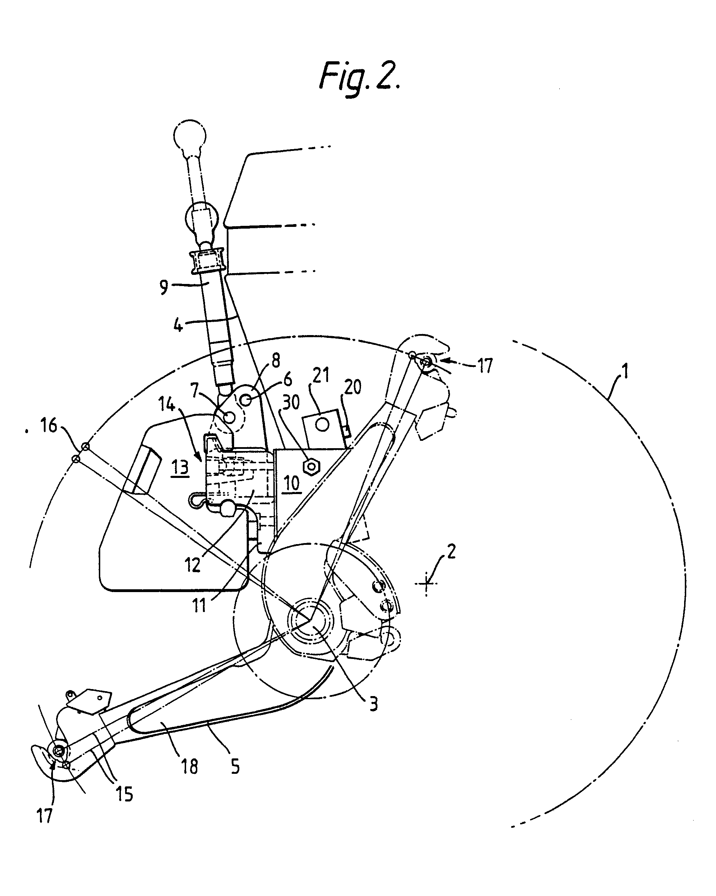

The lower links 5 can be swung between a lowered position 15 and an upper position 16 and, in addition, into a inoperative position behind the front surface of the front panelling 4, as shown in broken lines in Fig. 2. In their inoperative position, the lower links 5 do not form an obstacle endangering other traffic.

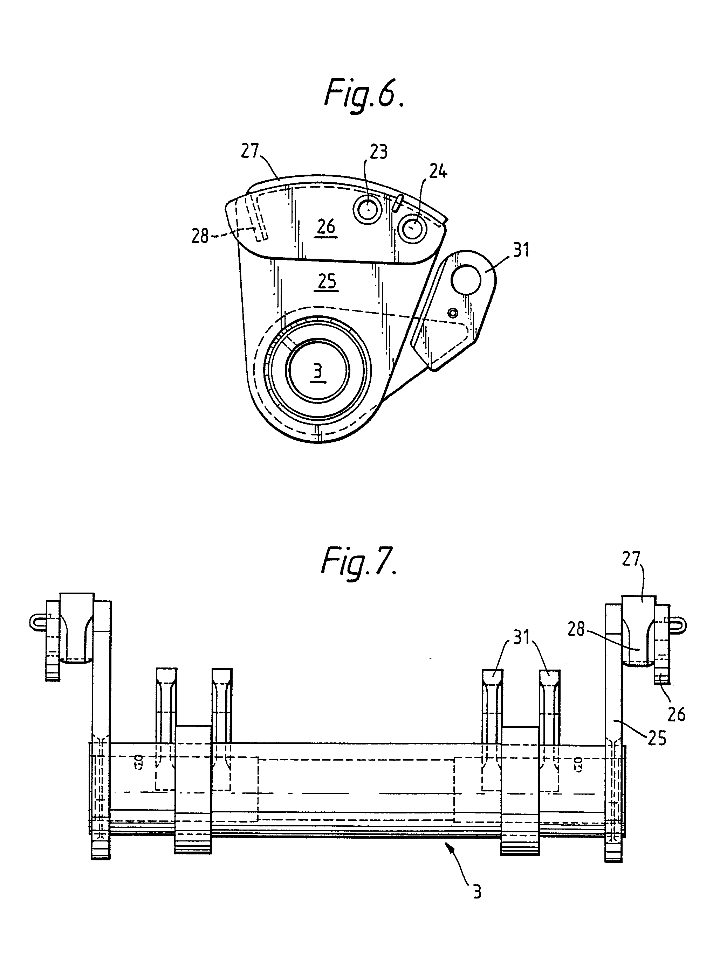

As shown in Figs. 6 and 7, the rock shaft 3 is tubular and has fixed to it two pairs of connecting lugs 31 for left hand and right hand single-acting hydraulic cylinders 21, which are supplied with pressure liquid by way of a connection 20 when raising of the lower links is required, the line of action of each cylinder 21 being indicated by the reference number 34.

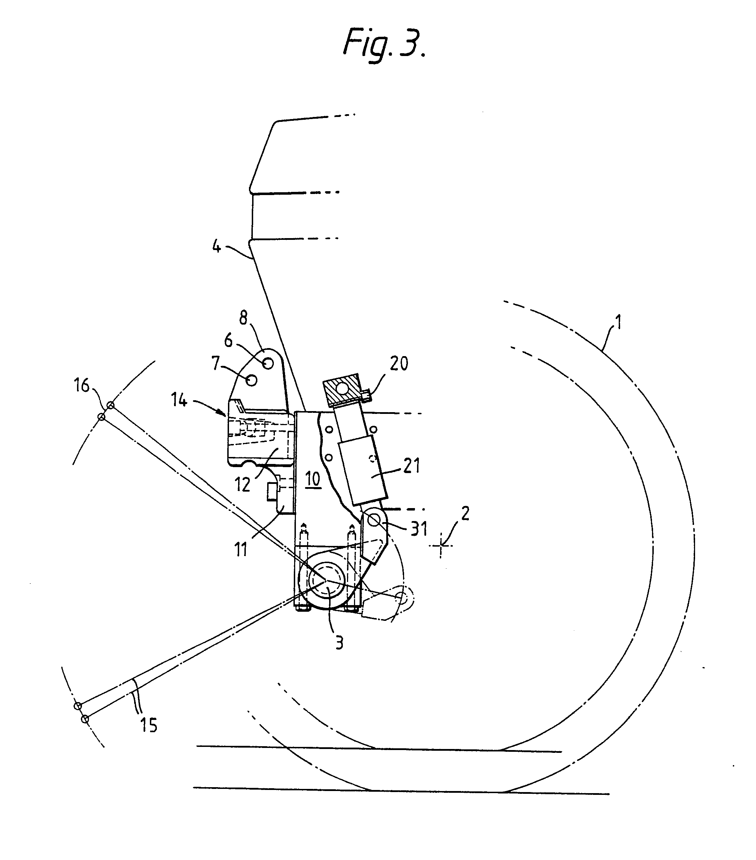

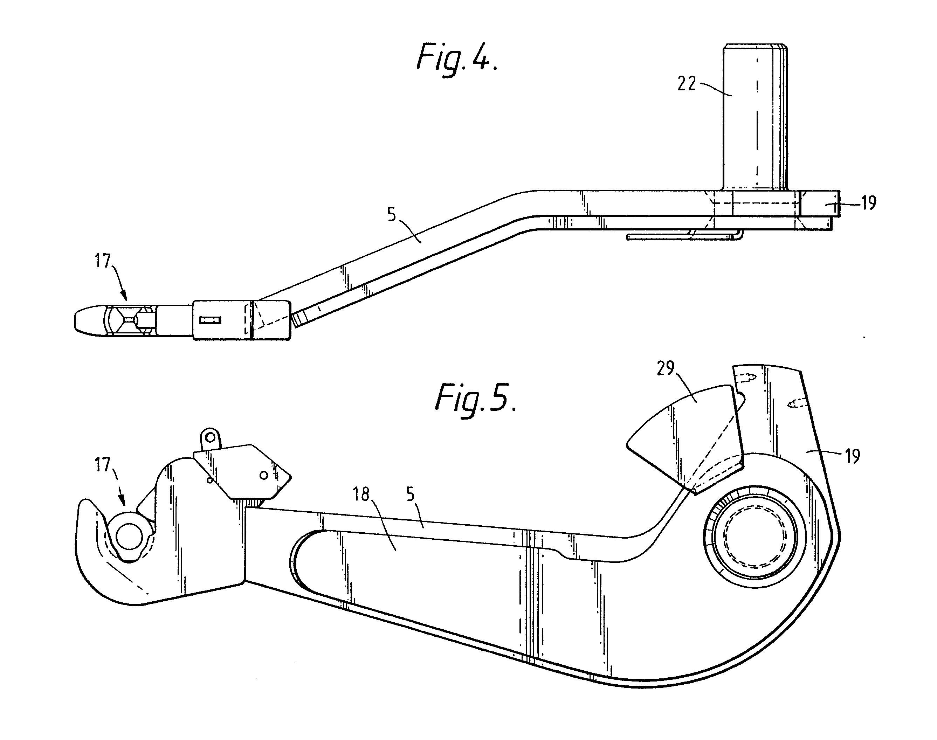

As shown in Figs. 1 to 3, but more particularly in Figs. 4 and 5, each lower link 5 is formed as a bellcrank which respect to the rock shaft 3. The front ends of the lower links 5 have coupling points 17 for an implement, said links are reinforced by stiffening plates 18. Beyond the axis of the rock shaft 3, each lower link 5 has a rear extension 19.

Said extension forms an obtuse angle with that part of the lower link 5 having the implement coupling point 17 in order that the rearward extension 19 does not dip and adequate ground clearance is ensured when the three-point linkage is raised untill the lower links 5 reach their inoperative position.

Each lower link 5 is removeably fitted, in the lowered position 15, into one end of the tubular rock shaft 3 by means of an journal 22 (see Fig. 4), and is the raised until its rear extension 19 engages near its end in a pocket 25 secured to the rock shaft 3. Said pocket is provided on its periphery, concentric with the axis of the rock shaft 3, with a laterally protruding member 27 having an outer retaining flange 26, whereby the lower link 5 is fixed axially relative to the rock shaft 3. The front end 28 of the laterally protruding member 27 is directed towards the axis of the rock shaft 3 and limits forward angular movement of the rear extension 19 relative to the pocket 25. by inserting a retaining bolt 30 in mutally aligned holes 23 provided in the pocket 25 and in it retaining flange 26, the lower link 5 is rigidly fixed relative to the rock shaft 3, and by inserting said bolt in mutually aligned holes 24 likewise provided in said pocket and said flange, the lower link 5 is connected to the rock shaft 3 with limited angular float. In order to obtain different lowered positions of the lower links 5, for instance to compensate for different tyre sizes on the front wheels, shims can be bolted to either side of the rearward extension 19. This allows a vertical adjustment of approximately 70 mm to be obtained.

In order to avoid errors in inserting the retaining bolt 30 in the holes 23, 24 of the pocket 25, there is welded onto each lower link 5 in the region of the rock shaft 3 a guard plate 29, which protrudes radially from said shaft and covers the holes 23, 24 when the lower links 5 are raised manually, in order that the retaining bolt 30 cannot be inserted in front of the rearward extension 19 and that, during a subsequent hydraulic raising, the lower links can be raised behind the front panelling without said panelling being damaged when there is an implement attached.

The retaining bolt 30 can be used to secure the lower links 5 in inoperative position when the hydraulic cylinders 21 are completely extended by removing said bolt from the holes 23 or 24 and inserting it in a hole provided in the frame 10 as shown in Fig. 2. The lower links 5 are then mechanically locked against swinging forwards.

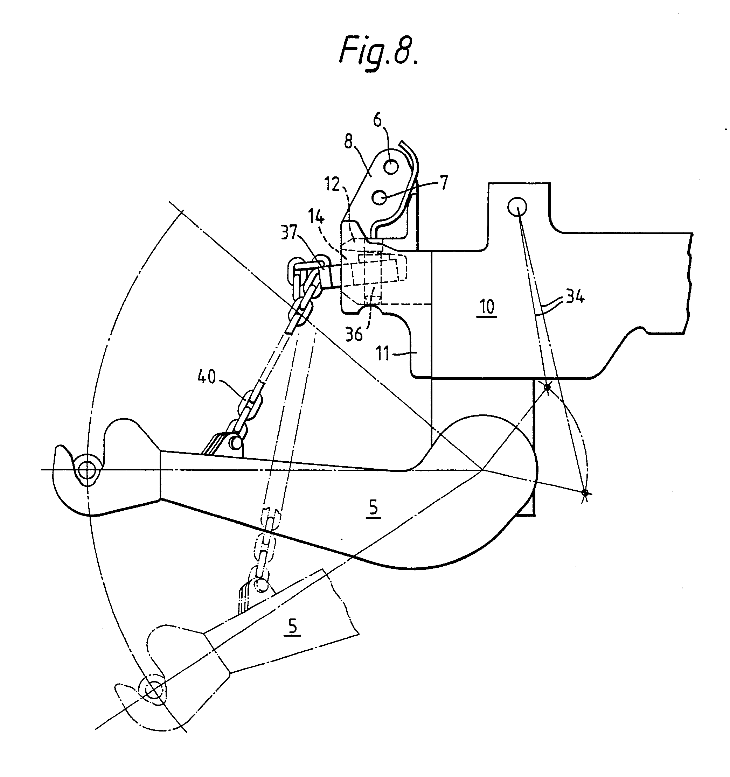

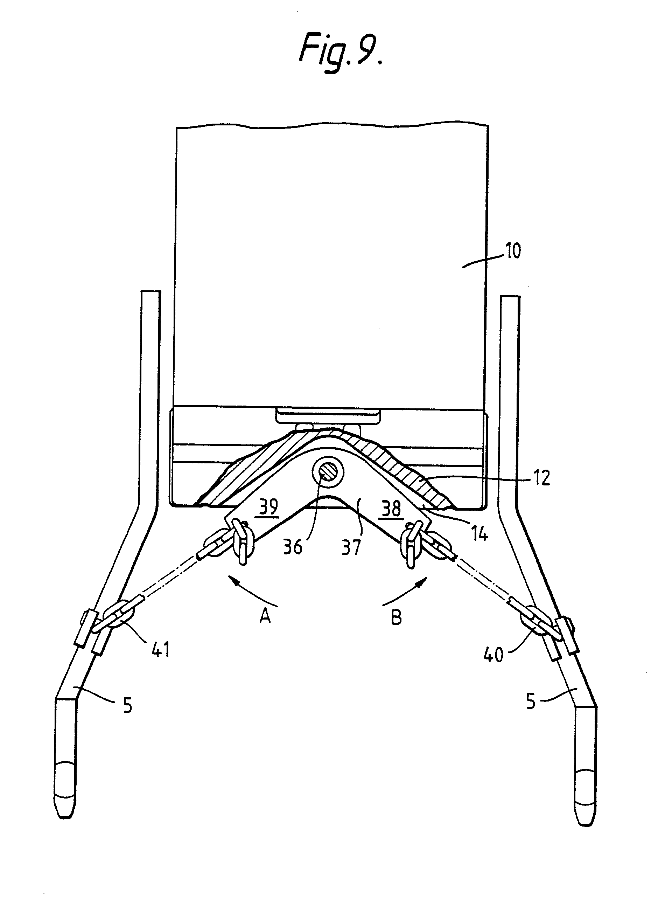

As shown in Figs. 8 and 9, when the draft jaw 14 is not in use for coupling an attachment, a holder 37 can be mounted in the draft jaw 14 by means of the bolt 36. The holder 37 has, in plan view as shown in Fig. 9, an obtuse-angled shape. Said holder can pivot about the bolt 36, as indicated by arrows A and B in Fig. 9. At the ends of its arms 38, 39, which extend laterally and forwardly, any of the links of two chains 40, 41, connected to the lower links 5, can be suspended, the length of said chains corresponding to the lowest position of the lower links 5. As a result, said links are mechanically arrested in individually adjustable automatically relocateable lowered positions and can be raised by the hydraulic cylinders 21 and lowered again as far as the adjusted chain lengths. Suitable choice of the chain strength ensures that the chains 40, 41 will not be overstressed during lowering of the lower links 5 by the hydraulic cylinders 21. Due to the use of single-acting hydraulic cylinders, all that need to be taken into consideration in choosing chain strength is the effect of the implement weight.

The chains 40, 41 can be connected to the lower links 5 and to the ends of the arms 38, 39 of the holder 37 without the aid of auxiliary tools, whilst providing positive limitation of the lowered position of the lower links 5. When adjusting to another position, normally at least one chain link has to be altered on each side. According to the exemplary embodiment, the adjustability is dependent on the chain pitch. A finer adjustment would only be possible by means of a turnbuckle, which however entails the eventual likeihood of a bent, damaged, rusted thread which makes fine adjustment difficult. According to the exemplary embodiment, it is possible to adjust only one of the chains. The resulting unevenness of the two chain lengths is equalized by pivoting of the holder 37. This also provides an optimum load distribution, which is not possible with known arrangements due to production tolerances. Owing to the optimum load distribution, the chain strengths can be correspondingly reduced. This present the opportunity of using chain "off the shelf".

The invention is not restricted to the exemplary embodiment described. Thus, the apparatus for the frontal connection of implements can also be fixed to the front end of a tractor frame in self-contained block design. The connectible implements, such as front ploughs, haymaking machines, and elements of soil cultivation combinations, are of commercially available types, do not require any adaptation to the frontal connection apparatus, and may also be used in conjunction with a front loader without the frontal connection appartus having to be removed, since the protrusion of the latter in front of the front panelling is small or the lower links can be swung into inoperative position. The use of an upper link together with the two lower links also allows coupling of an implement by means of an A-frame.

## Claims

1. Apparatus for the frontal connection of equipment to agricultrurally usable motor vehicles, in particular farming tractors, having lower links disposed outside the front panelling of such a tractor, mounted pivotably behind the front surface of said panelling, and provided with rear extensions in the manner of bellcrank levers; connecting lugs for an upper link; and hydraulic cylinders which act on the rear extensions of the lower links and are connected at their upper ends to a frame fixed to the front axle bearer; characterised by the combination of the following features, some of which are known per se:

a. the lower links (5) can be provided upwardly and rearwardly into an inoperative position by completely extending the hydraulic cylinders (21),

b. the frame (10) fixed to the front axle bearer has a central recess for receiving a power take-off casing (11) and on its front side has means for securing a bearing element (12) adapted to carry ballast weights (13) and incorporating a draft jaw (14) with a bolt (36).

2. Apparatus according to claim 1, characterised in that each lower link (5), in a certain angular position, can be removeable fitted by means of a journal (22) into one end of a tubular rock shaft (3) having lugs to which the lower ends of the hydraulic cylinder (21) are connected and, in all other angular positions, can be fixed axially by the confinement of its rear extensions (19) in a pocket (25) which is secured to the rock shaft (3) and has an outer retaining flange (26).

3. Apparatus according to claim 2, characterised in that mutually aligned holes (23, 24) are provided in the pocket (25) and in its retaining flange (26), into any of which holes a retaining bolt (30) for the rear extension (19) can be inserted, whereby each lower link (5) can either be rigidly fixed realtive to the rock shaft (3) or connected thereto with limited angular float.

4. Apparatus according to claim 3, characterised in that the same retaining bolt (30) can be inserted in a hole in a fixed part of the tractor, whereby each lower link (5) can be secured in its inoperative position.

5. Apparatus according to claim 2, characterised in that the pocket (25) secured to the rock shaft (3) is provided on its periphery, concentric with the axis of the rock shaft (3), with a laterally protruding member (27) the front end (28) of which is directed toward the axis of the rock shaft (3) and limits forward angular movement of the rear extension (19) relative to the pocket (25).

6. Apparatus according to any one of the preceding claims, characterised in that a holder (37), provided with arms (38, 39) extending laterally with respect to the direction of travel, can be pivotably mounted in the draft jaw (14) by the bolt (36), and that chains (40, 41) connected to the lower links (5) can be suspended by any one of their links at the end of the arms (38, 39).

7. Apparatus according to claim 6, characterised in that the length of the chains (40, 41) corresponds to the lowest position of the lower links (5).

8. Apparatus according to claim 6, chracterised in that the lower links (5) are mechanically arrested by the chains (40, 41) in individually adjustable automatically relocatable lowered positions and can be raised by the hydraulic cylinders (21) and lowered again as far as the adjusted chain lengths.

Fig.1.

*Fig. 2.*

# Fig.3.

0 274 853

Fig. 4.

Fig. 5.

## Fig.6.

## Fig.7.

# Fig.8.

# Fig.9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 094 975 (DEERE) <br> * Page 9, line 24 - page 11, line 19; figure 1 * | 1 | A 01 B 59/048 |
| Y,D | DE-A-2 758 978 (SCHMAHL) <br> * Page 4; figure 1 * | 1 | |
| A | GB-A-2 052 237 (KUHN) <br> * Figure 1 * | 6,7,8 | |
| A,D | FR-A-2 388 476 (KLÖCKNER-HUMBOLDT-DEUTZ) <br> & DE-A-2 718 959 | 2 | |
| A | DE-C- 939 960 (PFLUGFABRIK LEMKEN) | | |
| A | FR-A-2 074 720 (ETS. FAUCHEUX) | | |
| A | GB-A-2 033 720 (DEGENHART) | | |
| A,D | DE-A-3 216 589 (ALBERSINGER) | | TECHNICAL FIELDS SEARCHED (Int. Cl.4) |
| A,D | EP-A-0 133 637 (DEERE) | | A 01 B |
| A,D | DE-A-3 209 849 (ALBERSINGER) | | |
| A,D | DE-A-3 306 415 (KLÖCKNER-HUMBOLDT-DEUTZ) | | |

The present search report has been drawn up for all claims

| Place of search | Date of completion of the search | Examiner |
|---|---|---|
| THE HAGUE | 30-03-1988 | VON ARX V.U. |

EPO FORM 1503 03.82 (P0401)